# EUROPEAN PATENT APPLICATION

(11) **EP 1 584 467 A1**
(43) Date of publication of application: **12.10.2005**
(21) Application number: 05251765.3
(22) Date of filing: 22.03.2005
(51) Int. Cl.: B32B 27/32, G01N 33/00, B32B 23/06, B32B 7/10

(54) **Disposable sheet for the detection of radioactive substances**

(30) Priority: 07.04.2004 JP 2004112869
(71) Applicant: Kawashima Co., Ltd., Hokkaido 060-007 (JP)
(72) Inventor: Kawashima, Akio, c/o Kawashima Co., Ltd, Sapporo-shi Hokkaido 060-0007 (JP)
(74) Representative: Greenwood, John David

(57) **Abstract**

The present invention provides a disposable sheet including: a waterproof layer formed of a plastic sheet.; an intermediate colored layer formed of a water-based solvent absorbent material containing a dye soluble in a water-based solvent; and a non-colored layer formed of a water-based solvent absorbent material thereon. Contamination by a transparent and colorless toxic substance-containing water-based solution, which leaves no trace after drying, when the solution spills over the disposable sheet, can be easily detected and expansion of secondary contamination due to a hazardous material can be prevented.

## Description

The present invention relates to a disposable sheet.

In medical institutions such as research institutes or medical centers, examination or diagnosis generally involves: temporarily injecting into a subject to be examined (hereinafter, referred to as subject) (animal or human body) toxic substances such as radioactive isotope labeled compounds that are toxic to the human body for examining a subject site (affected part) of an experimental animal, an examinee, or the like; and photographing the subject site (such as an affected part) using a γ-camera or the like. Such reagents used for examination may spill over the floor or equipment such as a working table during working, and complete decontamination thereof is difficult by wiping off with a cloth, a paper, or the like. Thus, an attempt at preventing secondary contamination generally involves: spreading of a disposable sheet made of paper on the floor; wearing of an examination gown, an experiment gown, or a working gown made of disposable sheet by an examinee, a laboratory technician, a researcher, or a worker; and disposing the contaminated sheet or gown through a prescribed procedure.

However, the reagents for examination used in the examination or diagnosis are generally transparent and colorless water-based solutions. No trace of contamination remains after evaporation of a solvent even if the solution spills over the disposable sheet, and a contaminated site is hardly observed visually. Thus, a worker such as a laboratory technician assumes that an experiment gown is not contaminated and repeatedly uses the relatively expensive experiment gown made of disposable sheet, leading to possible secondary contamination such as isotope radiation exceeding a reference dose.

The inventors of the present invention conducted extensive studies in view of the above identified problems, and solved them by: modifying a water-based solvent absorbent material layer of a conventional disposable sheet formed of a waterproof layer and the water-based solvent absorbent material layer into a laminate structure of a water-based solvent absorbent material layer on a surface and an intermediate colored layer thereunder containing a dye soluble in a water-based solvent; and forming a disposable sheet as claimed in claim 1 so allowing easy observation of contamination. That is, when a toxic substance-containing water-based solution spills over, the dye of the intermediate colored layer which is soluble in water migrates and diffuses into a surface non-colored layer, and contamination due to the toxic substance-containing water-based solution clearly remains on the surface layer after evaporation of the water-based solvent.

Embodiments of the present invention can provide a disposable sheet capable of easily detecting contamination due to a transparent and colorless toxic substance-containing water-based solution, which leaves no trace after drying when the solution spills over the disposable sheet, and to facilitate prevention of expansion of secondary contamination due to a hazardous material.

The disposable sheet of the present invention is capable of easily detecting contamination due to a water-based solution containing components that are toxic to a human body. The present invention more specifically relates to a disposable sheet which is useful for preventing secondary contamination of a worker such as a researcher or a laboratory technician due to a water-based solution containing: toxic substances such as radioactive isotope labeled compounds that are toxic to a human body and temporarily used for examining an affected part or the like of an experimental animal or a person to be examined (hereinafter, referred to as examinee); bacteria; or the like.

The intermediate colored layer and the non-colored layer may each be formed of a water-based solvent absorbent material.

The water-based solvent absorbent material may be paper, a woven fabric, or a non-woven fabric.

The waterproof layer may be formed of a waterproof plastic sheet, optionally formed of polyolefin.

The disposable sheet may be constructed to be capable of detecting contamination due to a toxic substance-containing water-based solution, including a toxic substance containing a radioactive element.

In the disposable sheet for detecting contamination according to the present invention, the contaminated site is colored for simple observation of contamination. The contaminated site remains colored even after the evaporation of the solvent, and thus a worker will not lose track of the contaminated site. A waterproof base inhibits penetration of a contaminant underneath the disposable sheet, to thereby prevent expansion of contamination. When the disposable sheet for detecting contamination is contaminated, decontamination can be carried out simply by disposing the disposable sheet through a predetermined procedure.

Embodiments of the present invention will now be described, by way of example only, with reference to the accompanying Figures in which

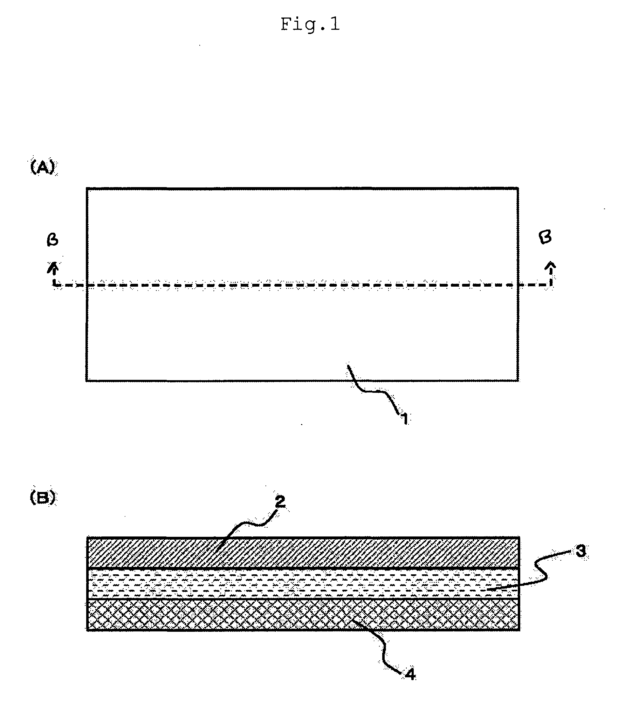

Figures 1 A and 1 B are a plan view and a sectional side view, respectively, of a disposable sheet for detecting contamination due to a toxic substance-containing water-based solution according to the present invention.

Hereinafter, the disposable sheet for detecting contamination of the present invention will be described with reference to a drawing. In the specification of the present invention, the term a water-based solution not only refers to a simple aqueous solution, but also includes a solution mainly composed of water and containing other solvents (such as alcohol) soluble in water or containing various substances (salts) soluble in water. The term a water-based solvent not only refers to water, but also includes a solvent mainly composed of water and containing other solvents (such as alcohol) soluble in water.

Fig. 1 (A) is a plan view of an example of a disposable sheet for detecting contamination according to the present invention, and Fig. 1 (B) is a sectional side view thereof in the direction B-B of Figure 1(A).

A disposable sheet (1) of the example of the present invention includes three layers of a surface layer (2), an intermediate colored layer (3), and a base waterproof layer (4).

The surface layer (2) is formed of a water-based solvent absorbent material generally known as an absorbent material, and is a layer containing no water-soluble dyes of the intermediate layer described below. A white or light-colored paper, woven fabric, or non-woven fabric may generally be used as the surface layer (2), but the surface layer (2) may be colored as long as the color of the water-soluble dye can be clearly observed when a toxic substance-containing water-based solution adheres onto the surface layer (2) and when the water-soluble dye in the intermediate layer migrates and diffuses to the surface through water.

The intermediate layer (3) is a colored layer formed of a water-based solvent absorbent material containing a water-soluble dye, and is generally a layer prepared by coloring a paper, woven fabric, or non-woven fabric similar to that of the surface layer with the water-soluble dye. A type or content of the dye used is not particularly limited. The dye only needs to be water-soluble and have little toxicity. The content of the dye only needs to allow easy observation of a contaminated site when the toxic substance-containing water-based solution adheres onto the surface layer and when the dye migrates to the surface and the solution dries through evaporation of the solvent.

The base waterproof layer (4) is formed of a waterproof plastic sheet and prevents leak of contamination due to the toxic substance-containing water-based solution absorbed in the surface layer and the intermediate layer. A waterproof material may be a material similar to that used for a conventional disposable sheet, and examples thereof include: a polyester sheet such as a polyethylene terephthalate sheet; and a polyolefin sheet such as a polyethylene sheet or a polypropylene sheet. Of those, a polyolefin sheet is preferable, and a polyethylene sheet is particularly preferable.

The disposable sheet of the present invention can be produced in the same manner as that for the conventional disposable sheet except that a dye-containing sheet is used as the intermediate layer.

That is, the disposable sheet of the present invention can be produced easily by, for example: piling a colorless paper sheet and a dye-containing sheet; and placing a surface of the dye-containing sheet onto a plastic sheet having an adhesive applied for embossing under pressure.

A thickness of each layer of the disposable sheet of the present invention is not particularly limited, and may be adjusted arbitrarily according to the purpose. The disposable sheet of the present invention need not have a three layer structure of the waterproof layer, the intermediate colored layer, and the non-colored layer. Another layer formed of a water-based solvent non-absorbent material or water-based solvent absorbent material may be provided between the waterproof layer and the intermediate colored layer. Further, the surface layer may have a thickness through which a color of the intermediate layer is somewhat apparent.

Examples of the toxic substance of the toxic substance-containing water-based solution as a target for detecting contamination using the disposable sheet of the present invention include: radioactive isotope labeled compounds used for examinations in medical centers and the like; bacteria handled in research institutes and the like; and radioactive element compounds handled in nuclear power institutes such as nuclear power plants.

The disposable sheet for detecting contamination of the present invention is used as follows.

The disposable sheet for detecting contamination is spread over the floor, a working table, or the like. An examinee, a laboratory technician, or a researcher wears an examination gown or experiment gown formed of disposable sheet for handling the toxic substance-containing water-based solution. When the reagent for examination adheres to the disposable sheet, the reagent for examination is absorbed and a surface of a contaminated site is colored for easy observation of the contamination. The contamination can be easily observed even after a certain time period and after evaporation of the solvent because the contaminated site is colored. The contaminated disposable sheet is disposed through a predetermined procedure, to thereby prevent contamination due to the reagent for examination, which is a hazardous material.

## Claims

1. A disposable sheet **characterized by** including: a waterproof layer; an intermediate colored layer containing a dye soluble in a water-based solvent; and a non-colored layer thereon.

2. The disposable sheet as claimed in claim 1, in which the intermediate colored layer and the non-colored layer are each formed of a water-based solvent absorbent material.

3. The disposable sheet as claimed in claim 2, in which the water-based solvent absorbent material is a paper, a woven fabric, or a non-woven fabric.

4. The disposable sheet as claimed in claim 1, in which the waterproof layer is formed of a waterproof plastic sheet.

5. The disposable sheet as claimed in claim 4, in which the plastic sheet is formed of polyolefin.

6. The disposable sheet as claimed in any one of claims 1 to 5, which is capable of detecting contamination due to a toxic substance-containing water-based solution.

7. The disposable sheet as claimed in claim 6, in which the toxic substance is a substance containing a radioactive element.
